# EUROPEAN PATENT SPECIFICATION

(11) **EP 4 033 561 B1**
(45) Date of publication and mention of the grant of the patent: **28.10.2026**
(21) Application number: 20879055.0
(22) Date of filing: 16.09.2020
(51) Int. Cl.: H01M 4/04, B23K 26/362, H01M 4/139, B23K 26/00, B23K 26/0622, B23K 26/08, B23K 26/16, B23K 26/364, B23K 26/40, B23K 101/16, B23K 101/38, B23K 103/04, B23K 103/08, B23K 103/16

(54) **ELECTRODE MANUFACTURING METHOD USING LASER ETCHING AND ELECTRODE MANUFACTURING EQUIPMENT PERFORMING SAME**
ELEKTRODENHERSTELLUNGSVERFAHREN UNTER VERWENDUNG VON LASERÄTZUNG UND ELEKTRODENHERSTELLUNGSVORRICHTUNG ZUR AUSFÜHRUNG DESSELBEN
PROCÉDÉ DE FABRICATION D'ÉLECTRODE UTILISANT UNE GRAVURE LASER ET ÉQUIPEMENT DE FABRICATION D'ÉLECTRODE PERMETTANT SA MISE EN OEUVRE

(30) Priority: 24.10.2019 KR 20190132663
(43) Date of publication of application: 27.07.2022
(73) Proprietor: LG ENERGY SOLUTION, LTD., Seoul 07335 (KR)
(72) Inventor: KO, Myoung Jin, Daejeon 34122 (KR); PARK, Dong Hyeuk, Daejeon 34122 (KR); JEON, Su Ho, Daejeon 34122 (KR); LEE, Hyo Jin, Daejeon 34122 (KR); JO, Sung Jun, Daejeon 34122 (KR); KIM, Gil Woo, Daejeon 34122 (KR)
(74) Representative: Plasseraud IP
(86) International application number: PCT/KR2020/012484
(87) International publication number: WO 2021/080186

(56) References cited:
- WO-A1-2019/054137
- DE-A1- 102017 216 133
- JP-A- 2013 119 095
- JP-A- 2017 084 691
- KR-A- 20150 122 940
- KR-A- 20170 135 122
- KR-A- 20180 001 229
- KR-B1- 101 719 031
- US-A1- 2010 028 767
- US-A1- 2019 081 345
- US-A1- 2019 267 608

## Description

### CROSS-REFERENCE TO RELATED APPLICATION

The present application claims the benefit of the priority of Korean Patent Application No. 10-2019-0132663, filed on October 24, 2019.

### TECHNICAL FIELD

The present invention relates to an electrode manufacturing method using laser etching, and particularly, to an electrode manufacturing method and electrode manufacturing equipment performing same, in which a thickness of an electrode is reduced through laser ablation to improve a laser etching speed.

### BACKGROUND ART

Secondary batteries are generally constituted by positive and negative electrodes, in which an active material is applied on one surface or both surfaces of a collector, and a separator. Here, the positive and negative electrodes are formed by cutting an electrode sheet, including an electrode mixture applied on one surface or each of both surfaces thereof, into a desired size.

When the electrode sheet is cut, a shearing die technique of utilizing a die and punch for a cutting process has been widely used. When the die is used, the die has to be periodically maintained in order to smoothen the shear surface of the electrode. In addition, when the die is used, burrs may be formed on an end surface of the electrode, and lots of dust particles may be produced in use, thereby causing deterioration in battery performance and deterioration in safety.

Furthermore, it is difficult to perform precision cutting through the cutting method using the die, and because the shape thereof is fixed, cutting processes have to be performed several times using a plurality of dies so as to obtain the electrode having the desired shape and size.

Recently, in order to solve these limitation of the die, an electrode manufacturing method using a laser beam has been performed as in Patent document 1. As shown in FIG. 1, a laser beam, which is emitted from an electrode processing unit 20 onto on a surface of an electrode 10, is used to cut all of an electrode mixture layer 11 and an electrode collector 12 at a time. When the method described above is used, the precision cutting is possible, and the occurrence rate of dust particles is reduced. However, the electrode manufacturing method using the laser beam is a method appropriate for cutting a thin electrode, and when the electrode is cut by emitting the laser beam as in Patent document 1, there is a limitation to the range and time for emitting the laser beam. Thus, as shown in Table 1, as the thickness of the electrode is increased, the cutting speed is decreased.

**[Table 1]**

| Thickness | Notching speed of Laser (mm/s) | Notching speed of Die (mm/s) |
|---|---|---|
| 90 µm | 1000 | 1000 |
| 120 µm | 600 | 1000 |
| 200 µm | 300 | 1000 |

In Patent document 2, a hot air blower is used together with a laser beam to etch an active material film of an electrode, However, this method is a process for removing the active material film of the electrode, but does not improve a speed of performing an electrode cutting process.

Therefore, when the electrode sheet is cut, there is a need for a cutting method that improves a process speed while overcoming the limitation of the die.
US 2019/267608 A1, US 2010/028767 A1, KR 101 719 031 B1, and US 2019/081345A1 disclose an electrode manufacturing method comprising a laser cutting.

### DISCLOSURE OF THE INVENTION

### TECHNICAL PROBLEM

To solve the problems described above, the object of the present invention is to provide an electrode manufacturing method and an electrode forming device performing the same, in which, when an electrode sheet having an electrode mixture layer formed therein is cut, a portion of the electrode sheet is etched through laser ablation, the thickness thereof is adjusted into a specific thickness, and then, cutting is performed.

### TECHNICAL SOLUTION

To achieve the above object, the present invention provides an electrode manufacturing method as defined in the set of claims, the method includes a process (1) of preparing an electrode sheet in which an electrode mixture layer is formed on one surface or each of both surfaces of an electrode collector; a process (2) of etching a portion of the electrode mixture layer through laser ablation within a range not exposing the electrode collector; and a process (3) of cutting the etched portion of the electrode mixture layer of the electrode sheet to manufacture an electrode.

Here, the electrode manufacturing method may further include a suctioning and/or blowing process which is performed simultaneously with the process (2) and/or the process (3) or performed after each of the processes.

The cutting in the process (3) may be performed by using a laser.

The laser used in the process (3) may be the same as a light source used in the laser ablation of the process (2).

Here, a thickness of the electrode sheet used in the process (1) may be 100 µm or more.

With respect to the electrode mixture layer on one surface of the electrode collector, the etched thickness of the electrode mixture layer in the process (2) is 0.1 times to 0.3 times a total thickness of the electrode sheet.

A cutting speed in the process (3) may be 600 mm/s or more.

The cutting in the process (3) may be one of notching, punching, or slitting.

The laser beam in the laser ablation of the process (2) may have a pulse width of 1 ns to 300 ns.

The laser ablation of the process (2) may be performed on one surface of the electrode.

The process (3) may be performed between 1 second and 10 seconds after the process (2) is performed.

The present invention is an electrode forming device as electrode manufacturing equipment to perform the electrode manufacturing method described above, the electrode forming device including: a sheet conveying unit configured to move an electrode sheet at a constant speed; a laser irradiating unit configured to perform laser ablation that etches a portion of the electrode mixture layer within a range not exposing an electrode collector; and an electrode processing unit configured to cut the laser-irradiated portion.

The electrode processing unit may perform notching, punching, or slitting.

Also, the electrode processing unit may emit a laser.

The electrode forming device may be provided such that, in a traveling direction thereof, the laser ablation is performed first and then the cutting is performed.

A distance between the laser irradiating unit and the electrode processing unit may be 20 mm to 300 mm.

The present invention may be made by selecting and combining one or two or more non-conflicting features of the features described above.

### ADVANTAGEOUS EFFECTS

In the electrode manufacturing method according to the present invention as described above, the portion of the electrode mixture layer is etched through the laser ablation, and then, the cutting is performed. Thus, as in the manufacturing method using the die, the electrode sheet may be cut rapidly, and even a thick electrode may be cut.

Since the portion etched through the laser ablation is cut, the cut depth may be increased while the cut area is reduced, compared to existing laser ablation. Thus, the cutting accuracy may be improved. Also, since the active material layer is partially etched through the laser ablation, the foreign substances produced when cutting are reduced to thereby increase the battery performance.

In addition, since the laser beam is used when cutting, the separate maintenance is not required unlike the die, and the possibility of burrs that may occur when using the mold is reduced.

The electrode manufacturing method according to the present invention described above is economically feasible and effective because the laser beam is used to overcome the limitations of the die cutting, and the electrodes having various thicknesses may be cut rapidly compared to the existing laser cutting.

### BRIEF DESCRIPTION OF THE DRAWINGS

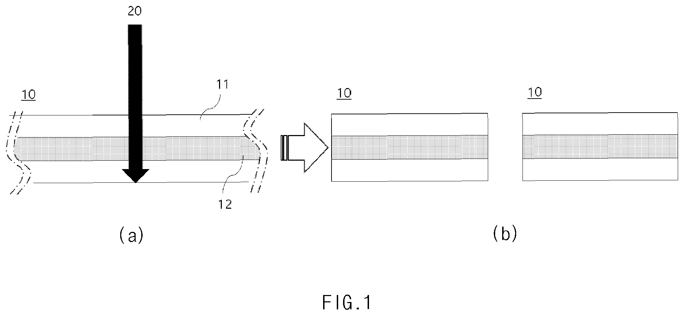

FIG. 1 is a mimetic diagram of an electrode manufacturing method of the related art.
FIG. 2 is a mimetic diagram of an electrode manufacturing method according to the present invention.
FIG. 3 shows cross-sectional views of electrodes in the electrode manufacturing method according to the present invention, illustrating an etching depth of an electrode to an etching width of a laser beam when the electrode is etched using the laser beam.
FIG. 4 is a mimetic diagram of electrode manufacturing equipment according to the present invention.

### MODE FOR CARRYING OUT THE INVENTION

Hereinafter, embodiments, which may be easily carried out by a person skilled in the art to which the present invention pertains, will be described in detail. However, in describing in detail an operation principle for exemplary embodiments of the present invention, the description of the related well-known functions or configurations will be omitted when it is determined that the detailed description thereof would unnecessarily obscure subject matters of the present invention.

Throughout the specification, when one part is referred to as being connected to another part, it can be directly connected to another part or indirectly connected thereto with intervening elements therebetween. In addition, that a certain element is included means that other elements are not excluded, but may be further included unless mentioned otherwise.

Also, an electrode sheet in the specification generally may indicate that an electrode mixture layer is formed on one surface or each of both surfaces of an electrode collector but also may include only an electrode collector.

Hereinafter, the present invention will be described in more detail.

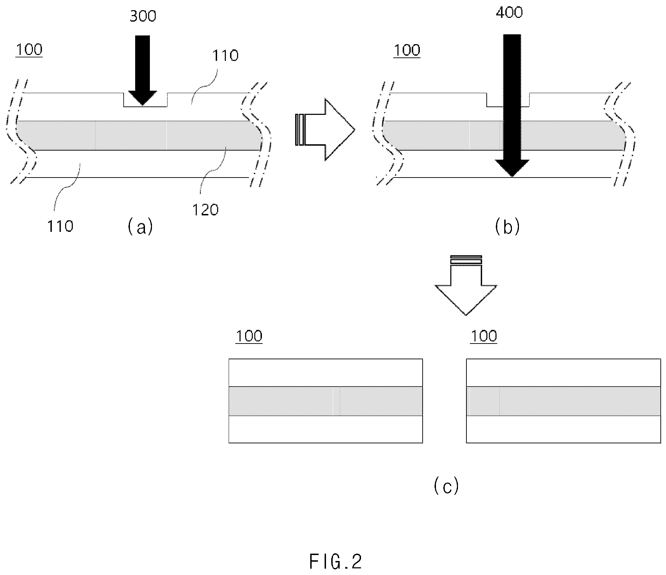

FIG. 2 is a mimetic diagram of an electrode manufacturing method according to the present invention. As shown in FIG. 2, provided is an electrode manufacturing method according to the present invention which includes (1) preparing an electrode sheet 100 in which an electrode mixture layer 110 is formed on one surface or each of both surfaces of an electrode collector 120; (2) etching a portion of the electrode mixture layer within a range not exposing the electrode collector of the electrode sheet (a of FIG. 2); and then (3) cutting the etched portion (b of FIG. 2) to manufacture an electrode.

A suctioning and/or blowing process may be further included, which is performed simultaneously with the process (2) and/or the process (3) or performed after each of the processes. Through the suctioning and/or blowing process, residual substances produced during the partial etching of the electrode mixture layer and the cutting process may be removed, and the efficiency in each of the processes may be improved.

The electrode collector is not particularly limited as long as it is a metal having high electrical conductivity without causing a chemical change of a battery. A positive electrode collector may include stainless steel, aluminum, nickel, titanium, baked carbon, or aluminum or stainless steel which is surface-treated with carbon, nickel, titanium, or silver, and specifically include aluminum. A negative electrode collector may include copper, stainless steel, aluminum, nickel, titanium, baked carbon, copper or stainless steel which is surface-treated with carbon, nickel, titanium, or silver, or an aluminum-cadmium alloy.

Theses collectors may have fine protrusions and recesses formed in the surface thereof to improve bonding strength with an active material, and may include various shape such as a film, a sheet, foil, a net, a porous body, a foam body, or a non-woven body.

The collector of the electrode may be generally manufactured to have a thickness of 3 µm to 500 µm, and preferably, the thickness is 3 µm to 100 µm for the capacity and efficiency of the electrode.

The electrode sheet may have a structure in which the electrode mixture layer is formed on one surface or each of both surfaces of the electrode collector. The electrode sheet may include an electrode sheet in which the electrode mixture layer is not formed on one surface or each of both surfaces thereof, but it is desirable to provide the electrode mixture layer because the electrode collector having no electrode mixture layer is thermally deformed when cut using a laser beam. The electrode mixture layer may be formed by mixing an electrode active material, a conductive material, and a binder.

Here, the positive electrode active material may include, but not limited to: a layered compound such as a lithium nickel oxide (LiNiO2) or a compound substituted with one or more transition metals; a lithium manganese oxide such as a chemical formula Li1+xMn2-xO4 (where, x is from 0 to 0.33), LiMnO3, LiMn2O3, and LiMnO2; lithium copper oxide (Li2CuO2); vanadium oxide such as LiV3O8, LiV3O4, V2O5, and Cu2V2O7; a Ni-site type lithium nickel oxide expressed by a chemical formula LiNi1-xMxO2 (where M=Co, Mn, Al, Cu, Fe, Mg, B, or Ga, and x=0.01-0.3); a lithium manganese composite oxide expressed by a chemical formula LiMn2-xMxO2 (where M=Co, Ni, Fe, Cr, Zn, or Ta, and x=0.01-0.1) or a chemical formula Li2Mn3MO8 (where M=Fe, Co, Ni, Cu, or Zn); LiMn2O4 where a portion of the Li of the chemical formula is substituted with alkaline earth metal ions; a disulfide compound; and Fe2(MoO4)3.

The negative electrode active material may include: carbon such as non-graphitized carbon and graphitized carbon; a complex metal oxide such as LixFe2O3 (0≤x≤1), LixWO2 (0≤x ≤1), SnxMe1-xMe'yOz (Me: Mn, Fe, Pb, or Ge; Me': Al, B, P, Si, Groups I, II and III elements, or halogen; 0<x≤1; 1≤y≤ 3; 1≤z≤8); a lithium metal; a lithium alloy; a silicon-based alloy; a tin-based alloy; a metal oxide such as SnO, SnO2, PbO, PbO2, Pb2O3, Pb3O4, Sb2O3, Sb2O4, Sb2O5, GeO, GeO2, Bi2O3, Bi2O4, and Bi2O5; a conductive polymer such as polyacetylene; and a Li-Co-Ni based material.

The conductive material is generally added at 0.1 wt% to 30 wt% on the basis of the total weight of the mixture including the electrode active material. The conductive material is not particularly limited as long as it has electrical conductivity without causing a chemical change in corresponding battery. For example, the conductive material may include: graphite such as natural graphite and artificial graphite; carbon black such as carbon black, acetylene black, Ketjen black, channel black, furnace black, lamp black, and thermal black; a conductive fiber such as a carbon fiber or a metal fiber; metal powder such as fluorocarbon, aluminum, and nickel powder; a conductive whisker such as a zinc oxide and potassium titanate; a conductive metal oxide such as a titanium oxide; and a conductive material such as a polyphenylene derivative.

The binder is a substance that assists in binding of the electrode active material and the conductive material and binding to the collector, and generally added at 0.1 wt% to 30 wt% on the basis of the total weight of the mixture including the electrode active material. For example, the binder may include: polyfluorovinylidene, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylenepropylene-diene-terpolymer (EPDM), sulfonated EPDM, styrenebutadiene rubber, fluoro rubber, and various copolymers.

A thickness of the electrode mixture layer may be 0.3 µm to 100 µm. Specifically, the thickness may be 0.5 µm to about 40 µm. The thickness of the electrode mixture layer may be 10% to 70% of the total thickness of the electrode.

In the process (2), a portion of the electrode mixture layer is etched through laser ablation within a range not exposing the electrode collector of the electrode sheet. The process of etching a portion of the electrode mixture layer is to remove a portion of the electrode mixture layer present on the electrode collector as in FIG. 2 to thereby reduce the thickness of a specific region of the electrode sheet.

When a portion of the electrode mixture layer is removed as described above, an amount of foreign substances such spatter, which would be generated when an existing electrode is cut, is reduced. The battery performance is deteriorated by the spatter, and thus, it is important to minimize and remove the spatter. For this, in the present invention, prior to cutting the electrode sheet, a portion of the electrode mixture layer is removed through the laser ablation. When the laser ablation is used as described above, lightweight and easily removable foreign substances such as fume are generated instead of hardly removable foreign substances such as spatter, and thus, the foreign substances may be removed. Subsequently, when the portion etched through the laser ablation is cut, an amount of foreign substances such as spatter may also be reduced because a thinner electrode sheet is cut compared to an existing method.

In the process (2), the electrode mixture layer is etched within a range not exposing the electrode collector. This is done because when the electrode mixture layer is entirely etched in the process (2), the laser cutting of the process (3) may damage the electrode collector, causing the deterioration in quality. Also, the laser beam may thermally deform a peripheral region of the electrode mixture layer or decompose the electrode mixture layer, causing the deterioration in quality and performance of the electrode.

The partial etching of the electrode mixture layer may be performed on only one surface of the electrode sheet. When the process (2) is performed on both surfaces of the electrode sheet, both surfaces are partially etched as different portions, and thus, it may be difficult to form uniform a cut surface. Also, the partially etched portions on both surfaces may be formed differently due to an error of a machine, causing defects in a product.

Various light sources such as ultraviolet light, visible light, infrared light, and microwave may be used as the laser beam used in the laser ablation of the process (2). However, the infrared light is preferable due to its high performance per price, or the infrared light is preferable due to its precise work.

Also, to prevent the deterioration in quality and functions of the electrode in the process (2) as described above, an output wavelength of the laser light of the laser ablation may be 500 nm to 1080 nm. Also, a focus diameter of the laser beam may be 15 µm to 300 µm. When the focus diameter of the laser beam is less than 15 µm, the intensity of the laser light is so high that the electrode collector may be exposed. Also, when exceeding 300 µm, the intensity of the laser light is so low that the electrode mixture layer may not be etched.

The output capability of the laser light may be 50 kW to 300 kW with respect to the average laser output. Here, when the output capability of the laser light is so high, the electrode collector may be exposed. Also, when the power is so low, it may be difficult to remove the electrode mixture layer. Thus, it is undesirable to exceed the power described above.

It is desirable that the pulse width of the laser light is 1 ns to 300 ns. When the laser pulse width is greater than the numerical range described above, the heat transfer time of the laser to the electrode is increased, and thus, a peripheral electrode mixture layer and electrode collector may be damaged. Also, when less than that range, the etching efficiency may be deteriorated.

In the process (1), the thickness of the electrode sheet may be 100 µm or more. The thickness of the electrode sheet may be less than 100 µm. However, when the thickness thereof is less than 100 µm, the electrode manufacturing speed is increased even if the electrode mixture layer is not partially etched in the electrode sheet. Thus, it is desirable that the thickness is 100 µm or more.

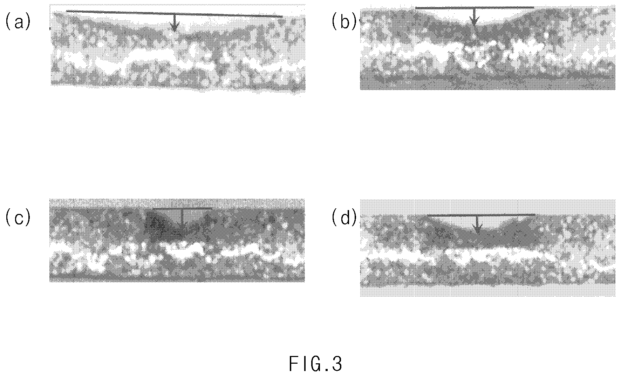

With respect to the electrode mixture layer on one surface of the electrode collector, the etched thickness of the electrode mixture layer in the process (2) is 0.1 times to 0.3 times the total thickness of the electrode sheet. FIG. 3 shows cross-sectional views of electrodes in the electrode manufacturing method according to the present invention, illustrating an etching depth of an electrode to an etching width of a laser beam when the electrode is etched using the laser beam. The electrode used in FIG. 3 is a positive electrode having a thickness of 120 µm. Here, the etching width of the laser beam may vary according to the thickness of the electrode, but is preferably set so that the focus diameter of the laser beam is 15 µm to 300 µm for the positive electrode having the thickness of 120 µm. The laser used in FIG. 3 was IR pulse laser. With respect to the average output, the output of the laser is 50-300 W, and the pulse width thereof is 1-300 ns.

In (A) of FIG. 3, an electrode cross-section is shown in a case where the laser beam is emitted from a height of 4 mm above a reference point. In (B) of FIG. 3, an electrode cross-section is shown in a case where the laser beam is emitted from a height of 2 mm above the reference point. In (C) of FIG. 3, an electrode cross-section is shown in a case where the laser beam is emitted from the reference point. In (D) of FIG. 3, an electrode cross-section is shown in a case where the laser beam is emitted from a height of 2 mm below the reference point. The reference point in (A) to (D) indicates a point where the focus diameter of the laser beam becomes 80 µm. The etching depths and the etching widths in the cross-sections of the etched electrode in (A) to (D) of FIG. 3 are shown in the following Table 2.

**[Table 2]**

| | Etching Width (µm) | Etching Depth (µm) |
|---|---|---|
| (A) | 303 | 20 |
| (B) | 197 | 25 |
| (C) | 80 | 26 |
| (D) | 172 | 17 |

As shown in Table 2, it may be found that the etching depth is greatest when the laser beam is emitted from the reference point. Also, it may be found that the point having the greatest etching depth is the same point having the smallest etching area. When the etching is performed by using the laser, the etching focus may vary according to the subsequent cutting process and the material and thickness of the electrode. However, it is found that the etched thickness of the electrode mixture layer is 0.1 times to 0.3 times the total thickness of the electrode sheet so as to etch the electrode most accurately.

Although a die may be used in an electrode sheet cutting method of the process (3), the die may cause the deterioration in performance and safety of the battery. Thus, it is desirable that the cutting is performed by the laser.

When the electrode sheet is cut by the laser in the process (3), the etching degree of the electrode mixture layer in the process (2) may be determined according to laser output capability, a pulse width, a frequency, a desired etching speed, a pulse repetition rate, and a hatching gap in the process (3). The laser output capability, the pulse width, the frequency, the desired etching speed, the pulse repetition rate, and the hatching gap may vary according to the thickness of the electrode sheet.

The present invention includes the process of cutting the etched portion of the electrode mixture layer after the process (2).

The cutting may be performed at a speed of 600 mm/s or more, and the cutting method may include notching, punching, or slitting. Here, a light source of the laser used in the process (3) may be the same as a light source used in the laser ablation of the process (2). Here, the light source of the laser used in the process (3) is preferably the ultraviolet light having high non-thermal processing factors.

It is desirable that the output capability of the laser used in the process (3) becomes higher, but it may be 50 W to 300 W. Taking into consideration price per performance, it may be more desirable to be 70 W to 200 W.

Also, it is desirable that a spot size in the electrode cutting is 10 µm to 100 µm. When exceeding the range described above, the quality of the battery may be affected. Also, it is undesirable when less than the range because the cutting is not easy.

Also, it is desirable that a speed of the laser is *600* mm/s or more when cutting, and there is no upper limit, that is, the faster the better. But, when taking into consideration a traveling speed of the electrode sheet, it may be 1500 mm/s or less. Also, it is desirable that the pulse width in the process (3) is 1 ns to 300 ns and the pulse repetition rate is 10 Khz to 300 Khz.

The output wavelength of the laser light may be 500 nm to 1080 nm.

The process (3) may be performed between 1 second and 10 seconds after the process (2) is performed. This is made because not only the processing of the electrode is facilitated by partially removing an electrode active material during the laser ablation, but also the processing may be easily performed by heating the electrode through the laser ablation.

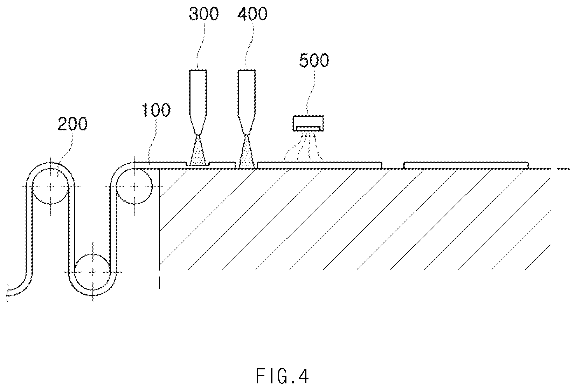

FIG. 4 is a mimetic diagram of electrode manufacturing equipment according to the present invention.

The electrode manufacturing equipment for performing the electrode manufacturing method according to the present invention may be an electrode forming device including: a sheet conveying unit 200 for moving an electrode sheet 100 at a constant speed; a laser irradiating unit 300 for performing laser ablation; and an electrode processing unit 400 for cutting the laser-irradiated portion.

It is desirable that a distance between the laser irradiating unit and the electrode processing unit is set to 300 mm or less, and the closer the better. However, taking into consideration the size of the laser equipment, the distance may be 20 mm or more. When exceeding 300 mm, an alignment difference between the position of laser ablation and the position of laser notching may be increased, causing a quality problem.

The electrode processing unit may perform the notching, punching, or slitting, and the electrode processing unit may perform the cutting by emitting the laser beam.

The laser of the electrode processing unit and the laser of the laser irradiating unit may have different intensities but have the same type of light source.

The electrode forming device of the present invention may be provided such that, in a traveling direction thereof, the laser ablation is performed first and then the cutting is performed.

The electrode forming device of the present invention may further include a suctioning or blowing unit 500. The suctioning or blowing unit may assist in increasing the efficiency of the laser by suctioning or removing residual substances generated from the laser irradiating unit and/or the electrode processing unit. The suctioning unit may include a vacuum pump or a suctioning device for suctioning electrode fragments. The suctioning or blowing unit may be provided at the same position as the laser irradiating unit and/or the electrode processing unit, provided between the laser irradiating unit and the electrode processing unit, or provided on a rear side when viewed in the traveling direction.

Although the present invention has been described in detail with reference to the specific features, it will be apparent to those skilled in the art that this description is only for a preferred embodiment and does not limit the scope of the present invention, which is defined in the claims. It will be apparent to those skilled in the art that various modifications and variations can be made without departing from the scope and technical ideas of the present claims and it is intended that all such modifications and variations be included within the scope of the appended claims.

## Claims

1. An electrode manufacturing method comprising:
a process (1) of preparing an electrode sheet in which an electrode mixture layer is formed on one surface or each of both surfaces of an electrode collector;
a process (2) of etching a portion of the electrode mixture layer through laser ablation within a range not exposing the electrode collector; and
a process (3) of cutting the etched portion of the electrode mixture layer of the electrode sheet to manufacture an electrode,
wherein, with respect to the electrode mixture layer on one surface of the electrode collector, the etched thickness of the electrode mixture layer in the process (2) is 0.1 times to 0.3 times a total thickness of the electrode sheet.

2. The electrode manufacturing method of claim 1, further comprising a suctioning and/or blowing process which is performed simultaneously with the process (2) and/or the process (3) or performed after each of the processes.

3. The electrode manufacturing method of claim 1, wherein the cutting in the process (3) is performed by using a laser.

4. The electrode manufacturing method of claim 3, wherein the laser used in the process (3) is the same as a light source used in the laser ablation of the process (2).

5. The electrode manufacturing method of claim 1, wherein a thickness of the electrode sheet in the process (1) is 100 µm or more.

6. The electrode manufacturing method of claim 1, wherein a cutting speed in the process (3) is 600 mm/s or more.

7. The electrode manufacturing method of claim 1, wherein the cutting in the process (3) comprises one of notching, punching, or slitting.

8. The electrode manufacturing method of claim 1, wherein the laser beam in the laser ablation of the process (2) has a pulse width of 1 ns to 300 ns.

9. The electrode manufacturing method of claim 1, wherein the laser ablation of the process (2) is performed on one surface of the electrode.

10. An electrode forming device as electrode manufacturing equipment to perform the electrode manufacturing method of any one of claims 1 to 9, the electrode forming device comprising:
a sheet conveying unit (200) configured to move the electrode sheet (100) at a constant speed;
a laser irradiating unit (300) configured to perform laser ablation that etches a portion of the electrode mixture layer within a range not exposing the electrode collector; and
an electrode processing unit (400) configured to cut the laser-irradiated portion,
wherein the electrode processing unit (400) emits a laser and wherein a distance between the laser irradiating unit (300) and the electrode processing unit (400) is 20 mm to 300 mm.

11. The electrode forming device of claim 10, wherein the electrode processing unit (400) performs one of notching, punching, or slitting.

## Patentansprüche

1. Verfahren zur Herstellung einer Elektrode, umfassend:
einen Prozess (1) des Vorbereitens einer Elektrodenfolie, bei dem eine Elektrodenmischungsschicht auf einer Oberfläche oder jeder der beiden Oberflächen eines Elektrodenkollektors gebildet wird;
einen Prozess (2) des Ätzens eines Abschnitts der Elektrodenmischungsschicht durch Laserablation innerhalb eines Bereichs, der den Elektrodenkollektor nicht freilegt; und
einen Prozess (3) des Schneidens des geätzten Abschnitts der Elektrodenmischungsschicht der Elektrodenfolie, um eine Elektrode herzustellen,
wobei, in Bezug auf die Elektrodenmischungsschicht auf einer Oberfläche des Elektrodenkollektors, die geätzte Dicke der Elektrodenmischungsschicht in dem Prozess (2) das 0,1-fache bis 0,3-fache einer Gesamtdicke der Elektrodenfolie beträgt.

2. Verfahren zur Herstellung einer Elektrode nach Anspruch 1, ferner umfassend einen Saug- und/oder Blasprozess, der gleichzeitig mit dem Prozess (2) und/oder dem Prozess (3) oder nach jedem der Prozesse durchgeführt wird.

3. Verfahren zur Herstellung einer Elektrode nach Anspruch 1, wobei das Schneiden in dem Prozess (3) unter Verwendung eines Lasers durchgeführt wird.

4. Verfahren zur Herstellung einer Elektrode nach Anspruch 3, wobei der in dem Prozess (3) verwendete Laser derselbe wie eine Lichtquelle ist, die bei der Laserablation des Prozesses (2) verwendet wird.

5. Verfahren zur Herstellung einer Elektrode nach Anspruch 1, wobei eine Dicke der Elektrodenfolie in dem Prozess (1) 100 µm oder mehr beträgt.

6. Verfahren zur Herstellung einer Elektrode nach Anspruch 1, wobei eine Schneidgeschwindigkeit in dem Prozess (3) 600 mm/s oder mehr beträgt.

7. Verfahren zur Herstellung einer Elektrode nach Anspruch 1, wobei das Schneiden in dem Prozess (3) eines von Kerben, Stanzen oder Schlitzen umfasst.

8. Verfahren zur Herstellung einer Elektrode nach Anspruch 1, wobei der Laserstrahl bei der Laserablation des Prozesses (2) eine Impulsbreite von 1 ns bis 300 ns aufweist.

9. Verfahren zur Herstellung einer Elektrode nach Anspruch 1, wobei die Laserablation des Prozesses (2) auf einer Oberfläche der Elektrode durchgeführt wird.

10. Elektrodenformeinrichtung als Elektrodenherstellungsausrüstung zur Durchführung des Verfahrens zur Herstellung einer Elektrode nach einem der Ansprüche 1 bis 9, wobei die Elektrodenformeinrichtung umfasst:
eine Folientransporteinheit (200), die konfiguriert ist, um die Elektrodenfolie (100) mit einer konstanten Geschwindigkeit zu bewegen;
eine Laserbestrahlungseinheit (300), die konfiguriert ist, um eine Laserablation durchzuführen, die einen Abschnitt der Elektrodenmischungsschicht innerhalb eines Bereichs ätzt, der den Elektrodenkollektor nicht freilegt;
und
eine Elektrodenbearbeitungseinheit (400), die konfiguriert ist, um den laserbestrahlten Abschnitt zu schneiden,
wobei die Elektrodenbearbeitungseinheit (400) einen Laser emittiert und wobei ein Abstand zwischen der Laserbestrahlungseinheit (300) und der Elektrodenbearbeitungseinheit (400) 20 mm bis 300 mm beträgt.

11. Elektrodenformeinrichtung nach Anspruch 10, wobei die Elektrodenbearbeitungseinheit (400) eines von Kerben, Stanzen oder Schlitzen durchführt.

## Revendications

1. Procédé de fabrication d'électrode comprenant :
un processus (1) de préparation d'une feuille d'électrode dans laquelle une couche de mélange d'électrode est formée sur une surface ou sur chacune des deux surfaces d'un collecteur d'électrode ;
un processus (2) de gravure d'une partie de la couche de mélange d'électrode par ablation laser dans une plage n'exposant pas le collecteur d'électrode ; et
un processus (3) de découpe de la partie gravée de la couche de mélange d'électrode de la feuille d'électrode pour fabriquer une électrode,
dans lequel, par rapport à la couche de mélange d'électrode sur une surface du collecteur d'électrode, l'épaisseur gravée de la couche de mélange d'électrode dans le processus (2) est de 0,1 fois à 0,3 fois une épaisseur totale de la feuille d'électrode.

2. Le procédé de fabrication d'électrode selon la revendication 1, comprenant en outre un processus d'aspiration et/ou de soufflage qui est réalisé simultanément avec le processus (2) et/ou le processus (3) ou réalisé après chacun des processus.

3. Le procédé de fabrication d'électrode selon la revendication 1, dans lequel la découpe dans le processus (3) est réalisée en utilisant un laser.

4. Le procédé de fabrication d'électrode selon la revendication 3, dans lequel le laser utilisé dans le processus (3) est le même qu'une source de lumière utilisée dans l'ablation laser du processus (2).

5. Le procédé de fabrication d'électrode selon la revendication 1, dans lequel une épaisseur de la feuille d'électrode dans le processus (1) est de 100 µm ou plus.

6. Le procédé de fabrication d'électrode selon la revendication 1, dans lequel une vitesse de découpe dans le processus (3) est de 600 mm/s ou plus.

7. Le procédé de fabrication d'électrode selon la revendication 1, dans lequel la découpe dans le processus (3) comprend l'un parmi l'encochage, le poinçonnage ou le fendage.

8. Le procédé de fabrication d'électrode selon la revendication 1, dans lequel le faisceau laser dans l'ablation laser du processus (2) a une durée d'impulsion de 1 ns à 300 ns.

9. Le procédé de fabrication d'électrode selon la revendication 1, dans lequel l'ablation laser du processus (2) est réalisée sur une surface de l'électrode.

10. Dispositif de formage d'électrode en tant qu'équipement de fabrication d'électrode pour mettre en œuvre le procédé de fabrication d'électrode selon l'une quelconque des revendications 1 à 9, le dispositif de formage d'électrode comprenant :
une unité de transport de feuille (200) configurée pour déplacer la feuille d'électrode (100) à une vitesse constante ;
une unité d'irradiation laser (300) configurée pour réaliser une ablation laser qui grave une partie de la couche de mélange d'électrode dans une plage n'exposant pas le collecteur d'électrode ;
et
une unité de traitement d'électrode (400) configurée pour découper la partie irradiée par laser,
dans lequel l'unité de traitement d'électrode (400) émet un laser et dans lequel une distance entre l'unité d'irradiation laser (300) et l'unité de traitement d'électrode (400) est de 20 mm à 300 mm.

11. Le dispositif de formage d'électrode selon la revendication 10, dans lequel l'unité de traitement d'électrode (400) réalise l'un parmi l'encochage, le poinçonnage ou le fendage.
